# EUROPEAN PATENT SPECIFICATION

(11) **EP 4 258 715 B1**
(45) Date of publication and mention of the grant of the patent: **04.12.2024**
(21) Application number: 21914090.2
(22) Date of filing: 22.12.2021
(51) Int. Cl.: H04W 12/02, H04L 41/0893, H04W 36/00, H04W 48/10, H04W 48/12

(54) **INFORMATION TRANSMISSION METHOD AND APPARATUS, RELATED DEVICES, AND STORAGE MEDIUM**
INFORMATIONSÜBERTRAGUNGSVERFAHREN UND -VORRICHTUNG, ZUGEHÖRIGE VORRICHTUNGEN UND SPEICHERMEDIUM
PROCÉDÉ ET APPAREIL DE TRANSMISSION D'INFORMATIONS, DISPOSITIFS ASSOCIÉS, ET SUPPORT DE STOCKAGE

(30) Priority: 28.12.2020 CN 202011581551
(43) Date of publication of application: 11.10.2023
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHEN, Ningyu, Beijing 100053 (CN)
(74) Representative: J A Kemp LLP
(86) International application number: PCT/CN2021/140586
(87) International publication number: WO 2022/143353

(56) References cited:
- EP-A1- 3 416 425
- WO-A1-2020/093247
- CN-A- 106 851 589
- CN-A- 110 100 481
- CN-A- 111 490 899
- US-A1- 2018 013 680

## Description

### CROSS-REFERENCE TO RELATED APPLICATIONS

This application is filed based on and claims priority to Chinese Patent application No. 202011581551.3 filed on December 28, 2020.

### TECHNICAL FIELD

The disclosure relates to the field of wireless communications, and in particular, to an information transmission method and apparatus, a related device, and a storage medium.

### BACKGROUND

A network slice (hereinafter, referred to as a slice) may provide differentiated services for different user communities. However, in the related art, a core network sends slice information to a terminal through dedicated signaling, and from the slice information, the terminal is informed that slices supported in a registered region where the terminal is located. In such a case, during switching, the terminal cannot select a frequency point or a cell suitable for its own slice according to the slice information.

Related arts can be found in EP 3416425 A1 and WO 2020/093247 A1.

### SUMMARY

In order to solve problems of the related art, embodiments of the disclosure provide an information transmission method and apparatus, a related device, and a storage medium.

The present invention is defined in the claims.

the

### BRIEF DESCRIPTION OF THE DRAWINGS

FIG. 1 is a schematic flowchart of an information transmission method according to an embodiment of the disclosure.
FIG. 2 is a schematic flowchart of another information transmission method according to an embodiment of the disclosure.
FIG. 3 is a schematic structural diagram of an information transmission apparatus according to an embodiment of the disclosure.
FIG. 4 is a schematic structural diagram of another information transmission apparatus according to an embodiment of the disclosure.
FIG. 5 is a schematic structural diagram of a network device according to an embodiment of the disclosure.
FIG. 6 is a schematic structural diagram of a terminal according to an embodiment of the disclosure.
FIG. 7 is a schematic structural diagram of an information transmission system according to an embodiment of the disclosure.

### DETAILED DESCRIPTION

The disclosure will be further described in detail below with reference to the drawings and embodiments.

When a base station directly broadcasts slice information (such as a slice identifier (ID), i.e., Single Network Slice Selection Assistance Information (S-NSSAI)), there may be a security risk. For example, a non-registered terminal or an illegal terminal may know, by receiving system information, what slice is supported by a current cell, and when the terminal recognizes that slices of the cell are security-sensitive slices (such as slices for the Party, government and army), the terminal may conduct destruction on the slices. Therefore, in the related art, broadcast of the slice information is not supported, instead, the slice information is sent to a terminal through dedicated signaling sent by a core network. The terminal knows, according to the slice information, slices supported in a registered region which includes several cells, that is, knows slice information of granularity of the registered region.

However, since the terminal obtains the slice information of the granularity of the registered region, the terminal cannot know slice information of a neighboring frequency point or cell, that is, cannot know slice information taking a frequency point or cell as granularity, and thus cannot select a frequency point or a cell suitable for its own slice according to slice information supported by a neighboring frequency or a neighboring cell.

On the above basis, a secure mode for transmitting slice information is provided in various embodiments of the disclosure, so that terminals supporting different slices may know the slice information taking the frequency point or cell as granularity, to select a frequency point or a cell suitable for its own slice according to the slice information supported by the neighboring frequency or the neighboring cell, and thus differentiated access may be implemented by using different network parameters.

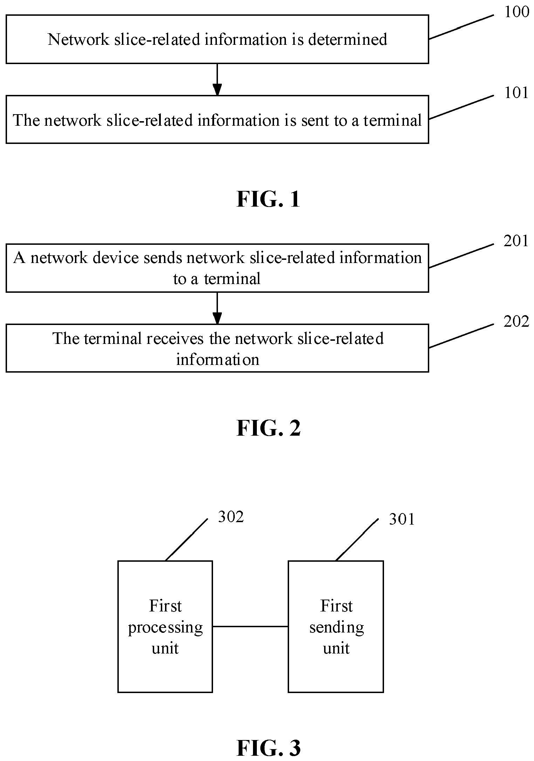

An embodiment of the disclosure provides an information transmission method, applied to a network device (in particular, a base station). As shown in FIG. 1, the method includes the following operation 101.

At 101, network slice-related information is sent to a terminal, and the network slice-related information includes at least one of first information, second information, third information or fourth information.

The first information indicates a network slice supported by a first cell, and the first information is different from an identifier of the network slice supported by the first cell.

The second information characterizes a correspondence between the network slice and a frequency.

The third information characterizes a correspondence between the network slice and a cell.

The fourth information characterizes a correspondence between the network slice and a cell access parameter.

Here, in the first information, the second information, the third information and the fourth information, an identifier of the network slice is processed by one of:
encrypting the identifier of the network slice by using a key;
truncating the identifier of the network slice; or
mapping the identifier of the network slice.

Before the operation 101 is performed, the network device needs to determine the network slice-related information.

On the above basis, in an embodiment, as shown in FIG. 1, the method may further include the following operation 100.

At operation 100, the network slice-related information is determined, that is, the network slice-related information is obtained.

In an actual application, the network slice-related information may be determined according to requirements, for example, may be obtained from the core network, or the like, the embodiment of the disclosure does not make limitation thereto.

In the first information, the second information, the third information and the fourth information, processing the identifier of the network slice refers to that identifiers of network slices involved in these information are processed. Specifically, in case of the first information, the first information is actually information obtained after any one of the above processes is performed on the identifier of the network slice supported by the first cell; in case of the second information, the second information includes information obtained after any one of the above processes is performed on the identifier of each network slice, and a corresponding frequency; in case of the third information, the third information includes information obtained after any one of the above processes is performed on the identifier of each network slice, and a corresponding cell; and in case of the fourth information, the fourth information includes information obtained after any one of the above processes is performed on the identifier of each network slice, and a corresponding cell access parameter.

Since the network slice-related information is not the slice identifier, i.e., S-NSSAI, the slice identifier may be obtained only through a certain process, so that transmission security of the slice information may be ensured.

Therefore, the network slice-related information may be sent to the terminal in a broadcast manner.

In an actual application, any one of the above processes may be performed on the slice identifier, i.e., the slice ID, such as S-NSSAI.

'encrypting' refers to that a network side configures a encryption key for the terminal, and the terminal uses the key to decrypt (also referred to as `decode') the slice-related information sent by the network side.

'truncating' refers to that a part of the slice identifier is formed into a new slice information, that is, a part of the slice ID is used and sent on an air interface, to implement secure transmission of the slice information. Specifically, S-NSSAI includes a Slice/Service Type (SST) and a Slice Differentiator (SD), for example, SST may be used to replace S-NSSAI. Therefore, not only resource overhead of the air interface is saved, but also an exposure risk of privacy security is avoided. Of course, other truncation manners may also be used, for example, several bits in the identifier may be intercepted.

'mapping' refers to that the slice identifier is not sent directly, instead, a mapping identifier corresponding to the slice identifier is sent, for example, a slice ID 1 is mapped to a mapping ID 1 (such as a category 1), a slice ID 2 is mapped to a mapping ID 2 (such as a category 2), the mapping relationship may be sent to the terminal through a dedicated message, and the dedicated message may be sent to the terminal by using a secure channel, such as an encrypted link. The network side sends the mapping ID through a broadcast message, rather than sending the slice ID, and the terminal may know a corresponding slice ID through the mapping relationship.

On the above basis, in an embodiment, the method further includes one of:
encrypting the identifier of the network slice by using a key;
truncating the identifier of the network slice; or
mapping the identifier of the network slice.

Specifically, in case of the first information, one of the following processes is performed on the identifier of the network slice supported by the first cell to obtain the first information:
encrypting the identifier of the network slice supported by the first cell, by using a key;
truncating the identifier of the network slice supported by the first cell; or
mapping the identifier of the network slice supported by the first cell.

In an actual application, when the identifier of the network slice is processed, the network side needs to send receiving configuration information of the slice information to the terminal. Specifically, in case of encrypting the identifier of the network slice by using the key, the receiving configuration information includes an encryption key, that is, when the identifier of the network slice supported by the first cell is encrypted by using the key, the encryption key needs to be informed to the terminal.

On the above basis, in an embodiment, the method may further include the following operations in case of encrypting the identifier of the network slice by using the key.

The key is sent to the terminal in a unicast manner.

That is, the key is sent to the terminal through a unicast encrypted link, to decode the slice identifier encrypted in the broadcast message.

In an actual application, during registration, the terminal may receive information of a registered region sent by the network side to the terminal, the registered region includes several cells or several tracking regions, while the terminal may also receive an encryption key sent by the network side and suitable for a slice identifier of the registered region. When the terminal is within the registered region, the key is used to decode the encrypted slice identifier.

When the terminal moves away from the registered region, the terminal initiates a registered region updating process to the network side, and the terminal receives information of a new registered region sent by the network side and an encryption key of a new slice identifier suitable for the new registered region, and may also receive a list of allowed slices. When the terminal moves within the registered region, the terminal uses the key suitable for the registered region to decode the slice identifier encrypted in the broadcast message.

That is, the key changes along with the change of the registered region of the terminal, that is, the key is valid in a current registered region.

Of course, in a registered region, the key may be changed, that is, the key may be varied, and the network side may enable the terminal to enter a connected state by way of paging, and update a key currently suitable for the registered region to the terminal; correspondingly, the network side also encrypts the slice identifier broadcasted on the air interface by using a new key, so that periodical or irregular change of the encryption key may be implemented.

In an actual application, the key may also be used to encrypt exclusive information sent by the network side to the terminal, to send the information by the broadcast message.

On the above basis, in an embodiment, the method further includes the following operations.

Fifth information is encrypted by using the key, and the fifth information includes dedicated information sent by the network side to the terminal.

The encrypted fifth information is sent to the terminal.

Specifically, the encrypted fifth information may be sent to the terminal in a broadcast manner.

In an actual application, the network side needs to inform the terminal that the fifth information is encrypted. Exemplarily, it is assumed that a certain system information N is sent in an encryption manner. The network side sends a key configuration message configured to decode the encrypted system information to the terminal, and the key configuration message may include at least one of:
indicating that the system information N is encrypted system information;
configuring information of a region, such as the registered region where the same key may be used to decode the system information; or
a key applicable to the region.

In case of truncating the identifier of the network slice, that is, in case that the identifier of the network slice is truncated, the network side also needs to send receiving configuration information of the slice information to the terminal. Specifically, in case of truncating the identifier of the network slice, the receiving configuration information includes a truncation indication which is configured to indicate to the slice information that the slice identifier is truncated.

On the above basis, in an embodiment, the method may further include the following operations in case of truncating the identifier of the network slice.

Sixth information is sent to the terminal, and the sixth information indicates that the identifier of the network slice in the network slice-related information is truncated.

In an actual application, the sixth information may be sent to the terminal through a system message or dedicated signaling.

In case of mapping the identifier of the network slice, that is, in case that the identifier of the network slice is mapped, the network side also needs to send receiving configuration information of the slice information to the terminal. Specifically, in case of mapping the identifier of the network slice, the receiving configuration information includes a mapping indication which is configured to indicate to the slice information that the slice identifier is mapped.

On the above basis, in an embodiment, the method may further include the following operations in case of mapping the identifier of the network slice.

Seventh information is sent to the terminal, and the seventh information indicates that the identifier of the network slice in the network slice-related information is mapped.

In an actual application, the sixth information may be sent to the terminal through a system message or dedicated signaling.

The mapping relationship for mapping may be sent to the terminal through a dedicated message, so that the terminal may obtain the identifier of the network slice according to the mapping relationship.

The a correspondence between the network slice and a frequency refers to identifying that a certain frequency supports a certain slice, or a frequency priority corresponding to a certain slice, i.e., a network slice supported by one frequency (which may also be referred to as deployment of the network slice in one frequency), or a frequency priority corresponding to one slice (which may also be referred to as a frequency priority used by one slice).

The a correspondence between the network slice and a cell refers to that a certain cell supports a certain slice, i.e., a network slice supported by one cell.

The a correspondence between the network slice and a cell access parameter refers to cell access parameters of a certain slice, and the cell access parameters may include a cell selection parameter (such as a lowest residence threshold, or the like) or a cell reselection parameter or other parameters, to implement that access thresholds of different slices are different, or reselection conditions or parameters of different slices are different, thereby implementing differentiated residence or reselection of the slices.

The correspondences indicated by the second information, the third information and the fourth information may be referred to as correspondences between the slice and network parameters.

In an actual application, the terminal may report capability of the terminal, and the network device may send the network slice-related information matched with the capability to the terminal according to the capability of the terminal.

On the above basis, in an embodiment, the method may further include the following operations.

Eighth information reported by the terminal is received, and the eighth information characterizes whether the terminal supports a processing capability (which may be referred to as capability for short) of the network slice-related information.

The processing capability includes at least one of:
whether the terminal supports encryption of the slice identifier;
whether the terminal supports truncation of the slice identifier;
whether the terminal supports mapping of the slice identifier;
whether the terminal supports the correspondences between the slice and frequencies;
whether the terminal supports the correspondences between the slice and cells; or
whether the terminal supports the correspondences between the slice and cell access parameters.

When the terminal supports encryption, truncation or mapping of the slice identifier, the network side needs to configure receiving configuration information of a current region for the terminal through dedicated signaling, as described above. Specifically, when the terminal supports encryption of the slice identifier, a key of the current region needs to be configured, the network side broadcasts the encrypted slice identifier in the system information, and the terminal uses the key to decode the encrypted system information and/or the encrypted slice identifier in the system information.

When the terminal does not support encryption, truncation or mapping of the slice identifier, the terminal cannot receive the slice information broadcasted in the system information.

Correspondingly, an embodiment of the disclosure further provides an information transmission method, the method is applied to a terminal and includes the following operations.

Network slice-related information sent by a network side is received, and the network slice-related information includes at least one of first information, second information, third information or fourth information.

The first information indicates a network slice supported by a first cell, and the first information is different from an identifier of the network slice supported by the first cell.

The second information characterizes a correspondence between the network slice and a frequency.

The third information characterizes a correspondence between the network slice and a cell.

The fourth information characterizes a correspondence between the network slice and a cell access parameter.

Here, in the first information, the second information, the third information and the fourth information, an identifier of the network slice is processed by one of:
encrypting the identifier of the network slice by using a key;
truncating the identifier of the network slice; or
mapping the identifier of the network slice.

In an actual application, the terminal may be referred to as a user equipment (UE), or may be referred to as a user.

In an embodiment, the network slice-related information may be received in a broadcast manner.

In an embodiment, the method may further include the following operations.

One of the following operations is performed on the network slice-related information:
decrypting the encrypted identifier of the network slice by using the key, to obtain the identifier of the network slice;
performing a truncation recovery process on the truncated identifier of the network slice, to obtain the identifier of the network slice; or
mapping the mapped identifier of the network slice, to obtain the identifier of the network slice.

When the network side encrypts the slice identifier, the terminal decrypts the encrypted slice identifier by using the key; when the network side truncates the slice identifier, the terminal performs the truncation recovery process on the truncated slice identifier; and when the network side maps the slice identifier, the terminal maps the mapped slice identifier.

In an embodiment, the method may further include the following operations in case of decrypting encrypted identifier of the network slice by using the key to obtain the identifier of the network slice.

The key sent by the network side is received in a unicast manner.

In an embodiment, the method may further include the following operations.

Encrypted fifth information sent by the network side is received, and the fifth information includes dedicated information sent by the network side to the terminal.

The encrypted fifth information is decrypted by using the key, to obtain the fifth information.

In an embodiment, the method may further include the following operations in case of performing the truncation recovery process on the truncated identifier of the network slice to obtain the identifier of the network slice.

Sixth information sent by the network side is received, and the sixth information indicates that the identifier of the network slice in the network slice-related information is truncated.

In an embodiment, the method may further include the following operations in case of mapping the mapped identifier of the network slice to obtain the identifier of the network slice.

Seventh information sent by the network side is received, and the seventh information indicates that the identifier of the network slice in the network slice-related information is mapped.

In an embodiment, the method may further include the following operations when the network slice-related information includes the second information, that is, in case that the network slice-related information includes the second information.

Network slice information (i.e., slice identifier) supported by a neighboring cell is determined by using the first information.

In an embodiment, the method may further include the following operations when the network slice-related information includes the second information, that is, in case that the network slice-related information includes the second information.

Network slice information supported by a neighboring frequency is determined by using the second information.

In an embodiment, the method may further include the following operations when the network slice-related information includes the third information, that is, in case that the network slice-related information includes the third information.

Network slice information supported by a neighboring cell is determined by using the third information.

In an embodiment, the method may further include the following operations when the network slice-related information includes the fourth information, that is, in case that the network slice-related information includes the fourth information.

Cell access parameters of a network slice supported by the terminal are determined by using the fourth information.

In an embodiment, the method may further include the following operations.

Eighth information is reported to the network side, and the eighth information characterizes whether the terminal supports capability of processing the network slice-related information.

An embodiment of the disclosure provides an information transmission method. As shown in FIG. 2, the method includes the following operations 201 and 202.

At 201, a network device sends network slice-related information to a terminal, and the network slice-related information includes at least one of first information, second information, third information or fourth information.

The first information indicates a network slice supported by a first cell, and the first information is different from an identifier of the network slice supported by the first cell.

The second information characterizes a correspondence between the network slice and a frequency.

The third information characterizes a correspondence between the network slice and a cell.

The fourth information characterizes a correspondence between the network slice and a cell access parameter.

Here, in the first information, the second information, the third information and the fourth information, an identifier of the network slice is processed by one of:
encrypting the identifier of the network slice by using a key;
truncating the identifier of the network slice; or
mapping the identifier of the network slice.

At 202, the terminal receives the network slice-related information.

It should be noted that specific operation processes of the network device and the terminal have been described in detail as above, and are not elaborated here.

According to the information transmission method provided in the embodiment of the disclosure, the network device sends network slice-related information to the terminal, and the network slice-related information includes at least one of first information, second information, third information or fourth information. The first information indicates a network slice supported by a first cell. The second information characterizes a correspondence between the network slice and a frequency. The third information characterizes a correspondence between the network slice and a cell. The fourth information characterizes a correspondence between the network slice and a cell access parameter. Here, in the first information, the second information, the third information and the fourth information, an identifier of the network slice is processed by one of: encrypting the identifier of the network slice by using a key; truncating the identifier of the network slice; or mapping the identifier of the network slice. According to the technical solution of the embodiment of the disclosure, the slice identifier is not sent directly, instead, related information capable of obtaining the slice identifier is sent, therefore security risks induced by directly sending the slice identifier is avoided; furthermore, a frequency priority for a specific slice, or a cell access parameter, or a cell reselection parameter, or other parameters may be configured for the terminal by sending the information, so that differentiated access of the slice is implemented, and the terminal may select a frequency point or a cell suitable for its own slice according to the slice information.

In order to implement the methods at the network device side according to the embodiments of the disclosure, an embodiment of the disclosure further provides an information transmission apparatus, arranged on a network device. As shown in FIG. 3, the apparatus includes a first sending unit 301.

The first sending unit 301 is configured to send network slice-related information to a terminal, and the network slice-related information includes at least one of first information, second information, third information or fourth information.

The first information indicates a network slice supported by a first cell.

The second information characterizes a correspondence between the network slice and a frequency.

The third information characterizes a correspondence between the network slice and a cell.

The fourth information characterizes a correspondence between the network slice and a cell access parameter.

Here, in the first information, the second information, the third information and the fourth information, an identifier of the network slice is processed by one of:
encrypting the identifier of the network slice by using a key;
truncating the identifier of the network slice; or
mapping the identifier of the network slice.

In an embodiment, as shown in FIG. 3, the apparatus may further include a first processing unit 302.

The first processing unit 302 is configured to determine the network slice-related information.

In an embodiment, the first sending unit 301 is configured to send the network slice-related information to the terminal in a broadcast manner.

In an embodiment, the first processing unit 302 is configured to perform one of:
encrypting the identifier of the network slice by using the key;
truncating the identifier of the network slice; or
mapping the identifier of the network slice.

In an embodiment, the first sending unit 301 is further configured to send the key to the terminal in a unicast manner, in case of encrypting the identifier of the network slice by using the key.

In an embodiment, the first processing unit 302 is further configured to encrypt fifth information by using the key, and the fifth information includes dedicated information sent by a network side to the terminal.

The first sending unit 301 is further configured to send the encrypted fifth information to the terminal.

In an embodiment, the first sending unit 301 is further configured to send sixth information to the terminal in case of truncating the identifier of the network slice, and the sixth information indicates that the identifier of the network slice in the network slice-related information is truncated.

In an embodiment, the first sending unit 301 is further configured to send seventh information to the terminal in case of mapping the identifier of the network slice, and the seventh information indicates that the identifier of the network slice in the network slice-related information is mapped.

In an embodiment, the apparatus may further include a second receiving unit. The second receiving unit is configured to receive eighth information reported by the terminal, and the eighth information characterizes whether the terminal supports capability of processing the network slice-related information.

In an actual application, the first sending unit 301 and the second receiving unit may be implemented by communication interfaces in the information transmission apparatus, and the first processing unit 302 may be implemented by a processor in the information transmission apparatus.

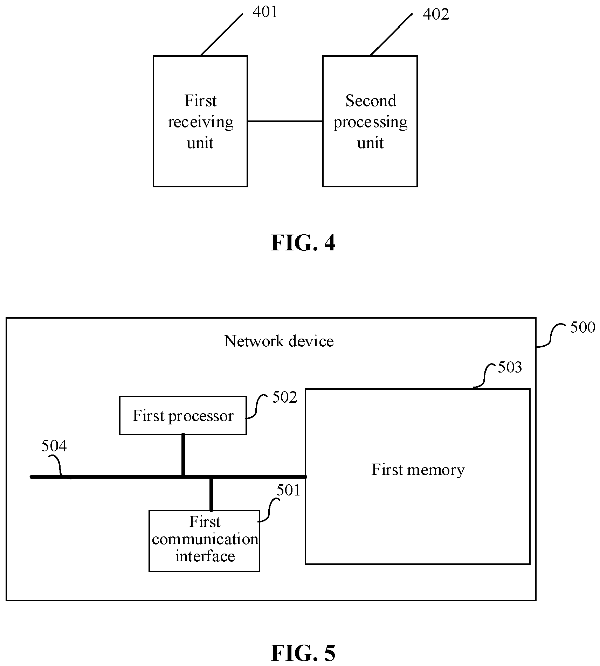

In order to implement the methods at the terminal side according to the embodiments of the disclosure, an embodiment of the disclosure further provides an information transmission apparatus, arranged on a terminal. As shown in FIG. 4, the apparatus includes a first receiving unit 401.

The first receiving unit 401 is configured to receive network slice-related information sent by a network side, and the network slice-related information includes at least one of first information, second information, third information or fourth information.

The first information indicates a network slice supported by a first cell, and the first information is different from an identifier of the network slice supported by the first cell.

The second information characterizes a correspondence between the network slice and a frequency.

The third information characterizes a correspondence between the network slice and a cell.

The fourth information characterizes a correspondence between the network slice and a cell access parameter.

Here, in the first information, the second information, the third information and the fourth information, an identifier of the network slice is processed by one of:
encrypting the identifier of the network slice by using a key;
truncating the identifier of the network slice; or
mapping the identifier of the network slice.

In an embodiment, the first receiving unit 401 is configured to receive the network slice-related information in a broadcast manner.

In an embodiment, as shown in FIG. 4, the apparatus may further include a second processing unit 402.

The second processing unit 402 is configured to perform, on the network slice-related information, one of:
decrypting the encrypted identifier of the network slice by using the key, to obtain the identifier of the network slice;
performing a truncation recovery process on the truncated identifier of the network slice, to obtain the identifier of the network slice; or
mapping the mapped identifier of the network slice, to obtain the identifier of the network slice.

In an embodiment, the first receiving unit 401 is further configured to receive the key sent by the network side in a unicast manner, in case of decrypting encrypted identifier of the network slice by using the key to obtain the identifier of the network slice.

In an embodiment, the first receiving unit 401 is further configured to receive encrypted fifth information sent by the network side, and the fifth information includes dedicated information sent by the network side to the terminal.

The second processing unit 402 is further configured to decrypt the encrypted fifth information by using the key, to obtain the fifth information.

In an embodiment, the first receiving unit 401 is further configured to receive sixth information sent by the network side in case of performing the truncation recovery process on the truncated identifier of the network slice to obtain the identifier of the network slice, and the sixth information indicates that the identifier of the network slice in the network slice-related information is truncated.

In an embodiment, the first receiving unit 401 is further configured to receive seventh information sent by the network side in case of mapping the mapped identifier of the network slice to obtain the identifier of the network slice, and the seventh information indicates that the identifier of the network slice in the network slice-related information is mapped.

In an embodiment, the second processing unit 402 is further configured to determine network slice information supported by a neighboring cell, by using the first information when the network slice-related information includes the first information.

In an embodiment, the second processing unit 402 is further configured to determine network slice information supported by a neighboring frequency, by using the second information when the network slice-related information includes the second information.

In an embodiment, the second processing unit 402 is further configured to determine network slice information supported by a neighboring cell, by using the third information when the network slice-related information includes the third information.

In an embodiment, the second processing unit 402 is further configured to determine cell access parameters of a network slice supported by the terminal, by using the fourth information when the network slice-related information includes the fourth information.

In an embodiment, the apparatus may further include a second sending unit. The second sending unit is configured to report eighth information to the network side, and the eighth information characterizes whether the terminal supports capability of processing the network slice-related information.

In an actual application, the first receiving unit 401 and the second sending unit may be implemented by communication interfaces in the information transmission apparatus, and the second processing unit 402 may be implemented by a processor in the information transmission apparatus.

It should be noted that when the information transmission apparatus provided in the above embodiments performs information transmission, only division of the program modules is exemplified, and in an actual application, the above processes may be allocated to be completed by different program modules according to requirements, that is, an internal structure of the apparatus is divided into different program modules to complete all or part of the above processes. Furthermore, the information transmission apparatus provided in the above embodiments belong to the same concept as the embodiments of the information transmission method, and specific implementation processes of the information transmission apparatus refer to the method embodiments for details, and are not elaborated here.

Based on hardware implementations of the above program modules, and in order to implement the methods at the network device side according to the embodiments of the disclosure, an embodiment of the disclosure further provides a network device. As shown in FIG. 5, the network device 500 includes a first communication interface 501, a first processor 502 and a first memory 503.

The first communication interface 501 may perform information interaction with the terminal.

The first processor 502 is connected to the first communication interface 501, to implement information interaction with the terminal, and the first processor 502 is configured to execute the above methods provided by one or more technical solutions at the network device side when the first processor 502 runs a computer program.

The computer program is stored on the first memory 503.

Specifically, the first communication interface 501 is configured to send network slice-related information to a terminal, and the network slice-related information includes at least one of first information, second information, third information or fourth information.

The first information indicates a network slice supported by a first cell.

The second information characterizes a correspondence between the network slice and a frequency.

The third information characterizes a correspondence between the network slice and a cell.

The fourth information characterizes a correspondence between the network slice and a cell access parameter.

Here, in the first information, the second information, the third information and the fourth information, an identifier of the network slice is processed by one of:
encrypting the identifier of the network slice by using a key;
truncating the identifier of the network slice; or
mapping the identifier of the network slice.

In an embodiment, the first processor 502 is configured to determine the network slice-related information.

In an embodiment, the first communication interface 501 is configured to send the network slice-related information to the terminal in a broadcast manner.

In an embodiment, the first processor 502 is configured to perform one of:
encrypting the identifier of the network slice by using the key;
truncating the identifier of the network slice; or
mapping the identifier of the network slice.

In an embodiment, the first communication interface 501 is further configured to send the key to the terminal in a unicast manner, in case of encrypting the identifier of the network slice by using the key.

In an embodiment, the first processor 502 is further configured to encrypt fifth information by using the key, and the fifth information includes dedicated information sent by a network side to the terminal.

The first communication interface 501 is further configured to send the encrypted fifth information to the terminal.

In an embodiment, the first communication interface 501 is further configured to send sixth information to the terminal in case of truncating the identifier of the network slice, and the sixth information indicates that the identifier of the network slice in the network slice-related information is truncated.

In an embodiment, the first communication interface 501 is further configured to send seventh information to the terminal in case of mapping the identifier of the network slice, and the seventh information indicates that the identifier of the network slice in the network slice-related information is mapped.

In an embodiment, the first communication interface 501 is further configured to receive eighth information reported by the terminal, and the eighth information characterizes whether the terminal supports capability of processing the network slice-related information.

It should be noted that specific operation processes of the first processor 502 and the first communication interface 501 may be understood with reference to the above methods.

Of course, in an actual application, various components in the network device 500 are coupled together by a bus system 504. It may be understood that the bus system 504 is configured to implement connection and communication between these components. In addition to including a data bus, the bus system 504 further includes a power bus, a control bus and a state signal bus. However, for clarity of illustration, various buses are marked as the bus system 504 in FIG. 5.

The first memory 503 in the embodiment of the disclosure is configured to store various types of data to support operations of the network device 500. Examples of these data include any computer program intended to be operated on the network device 500.

The above methods disclosed in the embodiments of the disclosure may be applied to the first processor 502, or may be implemented by the first processor 502. The first processor 502 may be an integrated circuit (IC) chip with signal processing capability. During implementation, operations of the above methods may be completed by an integrated logic circuit in form of hardware in the first processor 502 or instructions in form of software. The first processor 502 may be a general-purpose processor, a Digital Signal Processor (DSP), or other programmable logical devices, a discrete gate or a transistor logical device, a discrete hardware component, or the like. The first processor 502 may implement or execute the methods, operations and logical block diagrams disclosed in the embodiments of the disclosure. The general-purpose processor may be a microprocessor, or any conventional processor, or the like. Operations of the methods disclosed in combination with the embodiments of the disclosure may be directly embodied as being executed and completed by a hardware decoding processor, or executed and completed by a combination of hardware in the decoding processor and a software module. The software module may be located in a storage medium, the storage medium is located in the first memory 503, and the first processor 502 reads information in the first memory 503 and completes operations of the above methods in combination with hardware of the first processor 502.

In an exemplary embodiment, the network device 500 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, MicroController Units (MCUs), microprocessors, or other electronic components, and configured to execute the above methods.

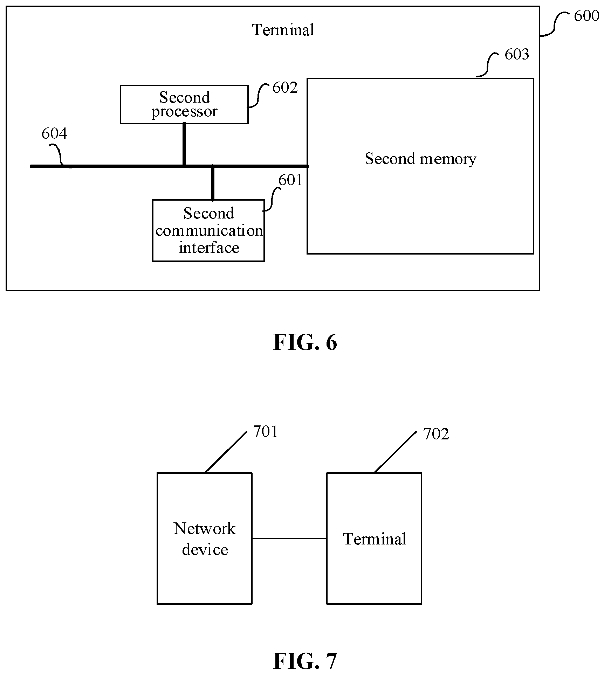

Based on hardware implementations of the above program modules, and in order to implement the methods at the terminal side according to the embodiments of the disclosure, an embodiment of the disclosure further provides a terminal. As shown in FIG. 6, the terminal 600 includes a second communication interface 601, a second processor 602 and a second memory 603.

The second communication interface 601 may perform information interaction with the network device.

The second processor 602 is connected to the second communication interface 601, to implement information interaction with the network device, and the second processor 602 is configured to execute the above methods provided by one or more technical solutions at the terminal side when the second processor 602 runs a computer program.

The computer program is stored on the second memory 603.

Specifically, the second communication interface 601 is configured to receive network slice-related information sent by a network side, and the network slice-related information includes at least one of first information, second information, third information or fourth information.

The first information indicates a network slice supported by a first cell, and the first information is different from an identifier of the network slice supported by the first cell

The second information characterizes a correspondence between the network slice and a frequency.

The third information characterizes a correspondence between the network slice and a cell.

The fourth information characterizes a correspondence between the network slice and a cell access parameter.

Here, in the first information, the second information, the third information and the fourth information, an identifier of the network slice is processed by one of:
encrypting the identifier of the network slice by using a key;
truncating the identifier of the network slice; or
mapping the identifier of the network slice.

In an embodiment, the second communication interface 601 is configured to receive the network slice-related information in a broadcast manner.

In an embodiment, the second processor 602 is configured to perform, on the network slice-related information, one of:
decrypting the encrypted identifier of the network slice by using the key, to obtain the identifier of the network slice;
performing a truncation recovery process on the truncated identifier of the network slice, to obtain the identifier of the network slice; or
mapping the mapped identifier of the network slice, to obtain the identifier of the network slice.

In an embodiment, the second communication interface 601 is further configured to receive the key sent by the network side in a unicast manner, in case of decrypting encrypted identifier of the network slice by using the key to obtain the identifier of the network slice.

In an embodiment, the second communication interface 601 is further configured to receive encrypted fifth information sent by the network side, and the fifth information includes dedicated information sent by the network side to the terminal.

The second processor 602 is further configured to decrypt the encrypted fifth information by using the key, to obtain the fifth information.

In an embodiment, the second communication interface 601 is further configured to receive sixth information sent by the network side in case of performing the truncation recovery process on the truncated identifier of the network slice to obtain the identifier of the network slice, and the sixth information indicates that the identifier of the network slice in the network slice-related information is truncated.

In an embodiment, the second communication interface 601 is further configured to receive seventh information sent by the network side in case of mapping the mapped identifier of the network slice to obtain the identifier of the network slice, and the seventh information indicates to the first information that the identifier of the network slice in the network slice-related information is mapped.

In an embodiment, the second processor 602 is further configured to determine network slice information supported by a neighboring cell, by using the first information when the network slice-related information includes the first information.

In an embodiment, the second processor 602 is further configured to determine network slice information supported by a neighboring frequency, by using the second information when the network slice-related information includes the second information.

In an embodiment, the second processor 602 is further configured to determine network slice information supported by a neighboring cell, by using the third information when the network slice-related information includes the third information.

In an embodiment, the second processor 602 is further configured to determine cell access parameters of a network slice supported by the terminal, by using the fourth information when the network slice-related information includes the fourth information.

In an embodiment, the second communication interface 601 is configured to report eighth information to the network side, and the eighth information characterizes whether the terminal supports capability of processing the network slice-related information.

It should be noted that specific operation processes of the second processor 602 and the second communication interface 601 may be understood with reference to the above methods.

Of course, in an actual application, various components in the terminal 600 are coupled together by a bus system 604. It may be understood that the bus system 604 is configured to implement connection and communication between these components. In addition to including a data bus, the bus system 604 further includes a power bus, a control bus and a state signal bus. However, for clarity of illustration, various buses are marked as the bus system 604 in FIG. 6.

The second memory 603 in the embodiment of the disclosure is configured to store various types of data to support operations of the terminal 600. Examples of these data include any computer program intended to be operated on the terminal 600.

The above methods disclosed in the embodiments of the disclosure may be applied to the second processor 602, or may be implemented by the second processor 602. The second processor 602 may be an IC chip with signal processing capability. During implementation, operations of the above methods may be completed by an integrated logic circuit in form of hardware in the second processor 602 or instructions in form of software. The second processor 602 may be a general-purpose processor, a DSP, or other programmable logical devices, a discrete gate or a transistor logical device, a discrete hardware component, or the like. The second processor 602 may implement or execute the methods, operations and logical block diagrams disclosed in the embodiments of the disclosure. The general-purpose processor may be a microprocessor, or any conventional processor, or the like. Operations of the methods disclosed in combination with the embodiments of the disclosure may be directly embodied as being executed and completed by a hardware decoding processor, or executed and completed by a combination of hardware in the decoding processor and a software module. The software module may be located in a storage medium, the storage medium is located in the second memory 603, and the second processor 602 reads information in the second memory 603 and completes operations of the above methods in combination with hardware of the second processor 602.

In an exemplary embodiment, the terminal 600 may be implemented by one or more ASICs, DSPs, PLDs, CPLDs, FPGAs, general-purpose processors, controllers, MCUs, microprocessors, or other electronic components, and configured to execute the above methods.

It may be understood that the memory (the first memory 503 and the second memory 603) in the embodiments of the disclosure may be a volatile memory or a non-volatile memory, or may include both the volatile and non-volatile memories. The non-volatile memory may be a Read Only Memory (ROM), a Programmable ROM (PROM), an Erasable PROM (EPROM), an Electrically EPROM (EEPROM), a Ferromagnetic Random Access Memory (FRAM), a flash memory, a magnetic surface memory, an optical disc, or a Compact Disc Read-Only Memory (CD-ROM); and the magnetic surface memory may be a magnetic disk memory or a magnetic tape memory. The volatile memory may be a Random Access Memory (RAM) used as an external cache. By way of exemplary descriptions rather than restrictive descriptions, many forms of RAMs are available, such as a Static RAM (SRAM), a Synchronous SRAM (SSRAM), a Dynamic RAM (DRAM), a Synchronous DRAM (SDRAM), a Double Data Rate SDRAM (DDR SDRAM), an Enhanced SDRAM (ESDRAM), a SyncLink DRAM (SLDRAM), a Direct Rambus RAM (DRRAM). The memory described in the embodiments of the disclosure is intended to include, but is not limited to, memories of these and any other proper types.

In order to implement the methods provided in the embodiments of the disclosure, an embodiment of the disclosure further provides an information transmission system. As shown in FIG. 7, the system includes a network device 701 and a terminal 702.

It should be noted that specific operation processes of the network device 701 and the terminal 702 have been described in detail as above, and are not elaborated here.

In an exemplary embodiment, an embodiment of the disclosure further provides a storage medium, i.e., a computer storage medium, specifically a computer-readable storage medium. For example, the storage medium includes the first memory 503 storing a computer program, and the computer program may be executed by the first processor 502 of the network device 500 to complete operations of the above methods at the network device side. For another example, the storage medium includes the second memory 603 storing a computer program, and the computer program may be executed by the second processor 602 of the terminal 600 to complete operations of the above methods at the terminal side. The computer-readable storage medium may be a memory such as a FRAM, a ROM, a PROM, an EPROM, an EEPROM, a flash memory, a magnetic surface memory, an optical disk, a CD-ROM, or the like.

It should be noted that "first", "second" or the like are intended to distinguish similar objects, rather than describing a specific order or sequence.

Furthermore, the technical solutions recited in the embodiments of the disclosure may be arbitrarily combined there-between without conflict.

The above descriptions are merely preferred embodiments of the disclosure, and are not intended to limit the scope of protection of the disclosure.

## Claims

1. An information transmission method, applied to a terminal, comprising:
receiving (202) network slice-related information sent by a network side, the network slice-related information comprising at least one of:
second information, the second information representing a correspondence between a network slice and a frequency;
third information, the third information representing a correspondence between the network slice and a cell; or
fourth information, the fourth information representing a correspondence between the network slice and a cell access parameter,
wherein the network slice-related information is used to configure for the terminal, a frequency priority for a specific slice, or, cell reselection parameter;
wherein in the second information, the third information and the fourth information, an identifier of the network slice is processed by one of:
the identifier of the network slice being encrypted by using a key;
the identifier of the network slice being truncated; or
the identifier of the network slice being mapped.

2. The method of claim 1, wherein the network slice-related information is received in a broadcast manner.

3. The method of claim 2, further comprising:
performing, on the network slice-related information, one of:
decrypting the encrypted identifier of the network slice by using the key, to obtain the identifier of the network slice;
performing a truncation recovery process on the truncated identifier of the network slice, to obtain the identifier of the network slice; or
mapping the mapped identifier of the network slice, to obtain the identifier of the network slice.

4. The method of claim 3, further comprising:
when the encrypted identifier of the network slice is decrypted by using the key, receiving the key sent by the network side in a unicast manner.

5. The method of claim 3, further comprising:
receiving encrypted fifth information sent by the network side, the fifth information comprising dedicated information sent by the network side to the terminal; and
decrypting the encrypted fifth information by using the key, to obtain the fifth information.

6. The method of claim 3, further comprising:
when the truncation recovery process is performed on the truncated identifier of the network slice to obtain the identifier of the network slice, receiving sixth information sent by the network side, the sixth information indicating that the identifier of the network slice in the network slice-related information is truncated.

7. The method of claim 3, further comprising:
when the mapped identifier of the network slice is mapped to obtain the identifier of the network slice, receiving seventh information sent by the network side, the seventh information indicating that the identifier of the network slice in the network slice-related information is mapped.

8. The method of claim 1, further comprising: when the network slice-related information comprises the second information,
determining network slice information supported by a first frequency, by using the second information.

9. The method of claim 1, further comprising: when the network slice-related information comprises the third information,
determining network slice information supported by a first cell, by using the third information.

10. The method of claim 1, further comprising: when the network slice-related information comprises the fourth information,
determining cell access parameters of a network slice supported by the terminal, by using the fourth information.

11. The method of any one of claims 1 to 10, further comprising:
reporting eighth information to the network side, the eighth information representing whether the terminal supports capability of processing the network slice-related information.

12. An information transmission method, applied to a network device, comprising:
sending (101) network slice-related information to a terminal, the network slice-related information comprising at least one of:
second information, the second information representing a correspondence between a network slice and a frequency;
third information, the third information representing a correspondence between the network slice and a cell; or
fourth information, the fourth information representing a correspondence between the network slice and a cell access parameter,
wherein the network slice-related information is used to configure for the terminal, a frequency priority for a specific slice, or, cell reselection parameter;
wherein in the second information, the third information and the fourth information, an identifier of the network slice is processed by one of:
the identifier of the network slice being encrypted by using a key;
the identifier of the network slice being truncated; or
the identifier of the network slice being mapped.

13. A network device, comprising: a first processor and a first memory configured to store a computer program executable on a processor,
wherein the first processor is configured to execute steps of the method of claim 12 when the first processor runs the computer program.

14. A terminal, comprising: a second processor and a second memory configured to store a computer program executable on a processor,
wherein the second processor is configured to execute steps of the method of any one of claims 1 to 11 when the second processor runs the computer program.

15. A storage medium having stored thereon a computer program which when executed by a processor, implements steps of the method of any one of claims 1 to 11 or steps of the method of claim 12.

## Patentansprüche

1. Verfahren zur Informationsübertragung, das auf eine Endvorrichtung angewendet wird und Folgendes umfasst:
Empfangen (202) von Informationen, die sich auf ein Netzwerk-Slice beziehen und von einer Netzwerkseite gesendet werden, wobei die Informationen, die sich auf ein Netzwerk-Slice beziehen, mindestens eines der Folgenden umfassen:
zweite Informationen, wobei die zweiten Informationen eine Entsprechung zwischen einem Netzwerk-Slice und einer Frequenz darstellen;
dritte Informationen, wobei die dritten Informationen eine Entsprechung zwischen dem Netzwerk-Slice und einer Zelle darstellen; oder
vierte Informationen, wobei die vierten Informationen eine Entsprechung zwischen dem Netzwerk-Slice und einem Zellen-Zugriffsparameter darstellen,
wobei die Informationen bezüglich dem Netzwerk-Slice verwendet werden, um für die Endvorrichtung eine Frequenzpriorität für ein spezifisches Slice oder einen Zellen-Neuwahlparameter zu konfigurieren;
wobei in den zweiten Informationen, den dritten Informationen und den vierten Informationen ein Identifikator des Netzwerk-Slice durch Folgendes verarbeitet wird:
der Identifikator des Netzwerk-Slice wird unter Verwendung eines Schlüssels verschlüsselt;
der Identifikator des Netzwerk-Slice wird abgeschnitten; oder
der Identifikator des Netzwerk-Slice wird abgebildet.

2. Verfahren nach Anspruch 1, wobei die auf den Netzwerk-Slice bezogenen Informationen in einer Broadcast-Weise empfangen werden.

3. Verfahren nach Anspruch 2, das ferner Folgendes umfasst:
Ausführen einer der folgenden Aktionen an den auf den Netzwerk-Slice bezogenen Informationen:
Entschlüsseln des verschlüsselten Identifizierers des Netzwerksegments unter Verwendung des Schlüssels, um den Identifizierer des Netzwerksegments zu erhalten;
Durchführen eines Kürzungswiederherstellungsprozesses an dem gekürzten Identifizierer des Netzwerksegments, um den Identifizierer des Netzwerksegments zu erhalten; oder
Zuordnen des zugeordneten Identifizierers des Netzwerksegments, um den Identifizierer des Netzwerksegments zu erhalten.

4. Verfahren nach Anspruch 3, das ferner Folgendes umfasst:
wenn der verschlüsselte Identifikator des Netzwerksegments unter Verwendung des Schlüssels entschlüsselt wird, Empfangen des von der Netzwerkseite in einer Unicast-Weise gesendeten Schlüssels.

5. Verfahren nach Anspruch 3, das ferner Folgendes umfasst:
Empfangen verschlüsselter fünfter Informationen, die von der Netzwerkseite gesendet werden, wobei die fünften Informationen dedizierte Informationen umfassen, die von der Netzwerkseite an die Endvorrichtung gesendet werden; und
Entschlüsseln der verschlüsselten fünften Informationen unter Verwendung des Schlüssels, um die fünften Informationen zu erhalten.

6. Verfahren nach Anspruch 3, das ferner Folgendes umfasst:
wenn der Kürzungswiederherstellungsprozess an dem gekürzten Identifizierer des Netzwerkschnitts durchgeführt wird, um den Identifizierer des Netzwerkschnitts zu erhalten, Empfangen von sechsten Informationen, die von der Netzwerkseite gesendet werden, wobei die sechsten Informationen anzeigen, dass der Identifizierer des Netzwerkschnitts in den auf den Netzwerkschnitt bezogenen Informationen gekürzt ist.

7. Verfahren nach Anspruch 3, das ferner Folgendes umfasst:
wenn der zugeordnete Identifikator des Netzwerk-Slice zugeordnet wird, um den Identifikator des Netzwerk-Slice zu erhalten, Empfangen von siebten Informationen, die von der Netzwerkseite gesendet werden, wobei die siebten Informationen anzeigen, dass der Identifikator des Netzwerk-Slice in den auf den Netzwerk-Slice bezogenen Informationen zugeordnet ist.

8. Verfahren nach Anspruch 1, das ferner Folgendes umfasst: wenn die auf den Netzwerk-Slice bezogenen Informationen die zweiten Informationen umfassen,
Bestimmen von Netzwerk-Slice-Informationen, die durch eine erste Frequenz unterstützt werden, unter Verwendung der zweiten Informationen.

9. Verfahren nach Anspruch 1, das ferner Folgendes umfasst: wenn die Netzwerk-Slice-bezogenen Informationen die dritten Informationen umfassen,
Bestimmen von Netzwerk-Slice-Informationen, die von einer ersten Zelle unterstützt werden, durch Verwendung der dritten Informationen.

10. Verfahren nach Anspruch 1, das ferner Folgendes umfasst: wenn die Netzwerk-Slice-bezogenen Informationen die dritten Informationen umfassen,
Bestimmen von Zellzugriffsparametern einer Netzwerk-Slice, die von der Endvorrichtung unterstützt wird, durch Verwendung der vierten Informationen.

11. Verfahren nach einem der Ansprüche 1 bis 10, das ferner Folgendes umfasst:
Melden von achten Informationen an die Netzwerkseite, wobei die achten Informationen angeben, ob die Endvorrichtung die Fähigkeit zur Verarbeitung der Netzwerk-Slice-bezogenen Informationen unterstützt.

12. Informationsübertragungsverfahren, das auf eine Netzwerkvorrichtung angewendet wird und Folgendes umfasst:
Senden (101) von Netzwerk-Slice-bezogenen Informationen an eine Endvorrichtung, wobei die Netzwerk-Slice-bezogenen Informationen mindestens eines der Folgenden umfassen:
zweite Informationen, wobei die zweiten Informationen eine Entsprechung zwischen einem Netzwerk-Slice und einer Frequenz darstellen;
dritte Informationen, wobei die dritten Informationen eine Entsprechung zwischen dem Netzwerk-Slice und einer Zelle darstellen; oder
vierte Informationen, wobei die vierten Informationen eine Entsprechung zwischen dem Netzwerk-Slice und einem Zellen-Zugriffsparameter darstellen,
wobei die Informationen bezüglich dem Netzwerk-Slice verwendet werden, um für die Endvorrichtung eine Frequenzpriorität für ein spezifisches Slice oder einen Zellen-Neuwahlparameter zu konfigurieren;
wobei in den zweiten Informationen, den dritten Informationen und den vierten Informationen ein Identifikator des Netzwerk-Slice verarbeitet wird, indem
der Identifikator des Netzwerk-Slice unter Verwendung eines Schlüssels verschlüsselt wird;
der Identifikator des Netzwerk-Slice abgeschnitten wird; oder
der Identifikator des Netzwerk-Slice abgebildet wird.

13. Netzwerkvorrichtung, die Folgendes umfasst: einen ersten Prozessor und einen ersten Speicher, die dafür konfiguriert sind, ein auf einem Prozessor ausführbares Computerprogramm zu speichern,
wobei der erste Prozessor dafür konfiguriert ist, Schritte des Verfahrens nach Anspruch 12 auszuführen, wenn der erste Prozessor das Computerprogramm ausführt.

14. Endvorrichtung, die Folgendes umfasst: einen zweiten Prozessor und einen zweiten Speicher, die dafür konfiguriert sind, ein auf einem Prozessor ausführbares Computerprogramm zu speichern,
wobei der zweite Prozessor dafür konfiguriert ist, Schritte des Verfahrens nach einem der Ansprüche 1 bis 11, auszuführen, wenn der zweite Prozessor das Computerprogramm ausführt.

15. Speichermedium, auf dem ein Computerprogramm gespeichert ist, das bei Ausführung durch einen Prozessor Schritte des Verfahrens nach einem der Ansprüche 1 bis 11 oder Schritte des Verfahrens nach Anspruch 12 implementiert.

## Revendications

1. Procédé de transmission d'informations, appliqué à un terminal, comprenant :
la réception (202) d'informations connexes à tranche de réseau envoyées par un côté réseau, les informations connexes à tranche de réseau comprenant au moins un type d'informations parmi :
des deuxièmes informations, les deuxièmes informations représentant une correspondance entre une tranche de réseau et une fréquence ;
des troisièmes informations, les troisièmes informations représentant une correspondance entre la tranche de réseau et une cellule ; ou
des quatrièmes informations, les quatrièmes informations représentant une correspondance entre la tranche de réseau et une paramètre d'accès à cellule,
dans lequel les informations connexes à tranche de réseau sont utilisées pour configurer, pour le terminal, une priorité de fréquence pour un paramètre de resélection de cellule, ou, tranche spécifique ;
dans lequel, dans les deuxièmes informations, les troisièmes informations et les quatrièmes informations,
un identifiant de la tranche de réseau est traité par un parmi :
l'identifiant de la tranche de réseau est chiffré en utilisant une clef ;
l'identifiant de la tranche de réseau est tronqué ; ou
l'identifiant de la tranche de réseau est mappé.

2. Procédé de la revendication 1, dans lequel les informations connexes à tranche de réseau sont reçues par le biais de diffusion.

3. Procédé de la revendication 2, comprenant en outre :
la réalisation, sur les informations connexes à tranche de réseau, d'un parmi :
le déchiffrement de l'identifiant chiffré de la tranche de réseau en utilisant la clef, pour obtenir l'identifiant de la tranche de réseau ;
la réalisation d'un processus de rectification de troncation sur l'identifiant tronqué de la tranche de réseau, pour obtenir l'identifiant de la tranche de réseau ; ou
le mappage de l'identifiant mappé de la tranche de réseau, pour obtenir l'identifiant de la tranche de réseau.

4. Procédé de la revendication 3, comprenant en outre :
lorsque l'identifiant chiffré de la tranche de réseau est déchiffré en utilisant la clef, la réception de la clef envoyée par le côté réseau par le biais de diffusion individuelle.

5. Procédé de la revendication 3, comprenant en outre :
la réception de cinquièmes informations chiffrées envoyées par le côté réseau, les cinquièmes informations comprenant des informations spécialisées envoyées par le côté réseau au terminal ; et
le déchiffrement des cinquièmes informations chiffrées en utilisant la clef, pour obtenir les cinquièmes informations.

6. Procédé de la revendication 3, comprenant en outre :
lorsque le processus de rectification de troncation est réalisé sur l'identifiant tronqué de la tranche de réseau pour obtenir l'identifiant de la tranche de réseau, la réception de sixièmes informations envoyées par le côté réseau, les sixièmes informations indiquant que l'identifiant de la tranche de réseau dans les informations connexes à tranche de réseau est tronqué.

7. Procédé de la revendication 3, comprenant en outre :
lorsque l'identifiant mappé de la tranche de réseau est mappé pour obtenir l'identifiant de la tranche de réseau, la réception de septièmes informations envoyées par le côté réseau, les septièmes informations indiquant que l'identifiant de la tranche de réseau dans les informations connexes à tranche de réseau est mappé.

8. Procédé de la revendication 1, comprenant en outre : lorsque les informations connexes à tranche de réseau comprennent les deuxièmes informations,
la détermination d'informations de tranche de réseau prises en charge par une première fréquence, en utilisant les deuxièmes informations.

9. Procédé de la revendication 1, comprenant en outre : lorsque les informations connexes à tranche de réseau comprennent les troisièmes informations,
la détermination d'informations de tranche de réseau prises en charge par une première cellule, en utilisant les troisièmes informations.

10. Procédé de la revendication 1, comprenant en outre : lorsque les informations connexes à tranche de réseau comprend les quatrièmes informations,
la détermination de paramètre d'accès à cellules d'une tranche de réseau prises en charge par le terminal, en utilisant les quatrièmes informations.

11. Procédé de l'une quelconque des revendications 1 à 10, comprenant en outre :
la notification de huitièmes informations au côté réseau, les huitièmes informations représentant le fait que le terminal prend en charge ou non une capacité de traiter les informations connexes à tranche de réseau.

12. Procédé de transmission d'informations, appliqué à un dispositif réseau, comprenant :
l'envoi (101) d'informations connexes à tranche de réseau à un terminal, les informations connexes à tranche de réseau comprenant au moins un type d'informations parmi :
des deuxièmes informations, les deuxièmes informations représentant une correspondance entre une tranche de réseau et une fréquence ;
des troisièmes informations, les troisièmes informations représentant une correspondance entre la tranche de réseau et une cellule ; ou
des quatrièmes informations, les quatrièmes informations représentant une correspondance entre la tranche de réseau et un paramètre d'accès à cellule,
dans lequel les informations connexes à tranche de réseau sont utilisées pour configurer, pour le terminal, une priorité de fréquence pour un paramètre de resélection de cellule, ou, tranche spécifique ;
dans lequel, dans les deuxièmes informations, les troisièmes informations et les quatrièmes informations, un identifiant de la tranche de réseau est traité par un parmi :
l'identifiant de la tranche de réseau est chiffré en utilisant une clef ;
l'identifiant de la tranche de réseau est tronqué ; ou
l'identifiant de la tranche de réseau est mappé.

13. Dispositif réseau, comprenant : un premier processeur et une première mémoire configurée pour stocker un programme informatique exécutable sur un processeur,
dans lequel le premier processeur est configuré pour exécuter les étapes du procédé de la revendication 12 lorsque le premier processeur exploite le programme informatique.

14. Terminal, comprenant : un second processeur et une seconde mémoire configurée pour stocker un programme informatique exécutable sur un processeur,
dans lequel le second processeur est configuré pour exécuter les étapes du procédé de l'une quelconque des revendications 1 à 11 lorsque le second processeur exploite le programme informatique.

15. Support de stockage ayant, stocké sur celui-ci, un programme informatique qui, lorsqu'il est exécuté par un processeur, met en oeuvre les étapes du procédé de l'une quelconque des revendications 1 à 11 ou les étapes du procédé de la revendication 12.
